(19) Europäisches Patentamt
European Patent Office
Office européen des brevets

(11) EP 4 671 526 A1

(12) **EUROPEAN PATENT APPLICATION**
published in accordance with Art. 153(4) EPC

(43) Date of publication:
**31.12.2025 Bulletin 2026/01**

(51) International Patent Classification (IPC):
*F03B 13/00* (2006.01)    *F03B 13/12* (2006.01)
*F03B 13/26* (2006.01)

(21) Application number: **23923909.8**

(22) Date of filing: **23.02.2023**

(52) Cooperative Patent Classification (CPC):
**F03B 13/00; F03B 13/12; F03B 13/26;** Y02E 10/30

(86) International application number:
**PCT/IB2023/051647**

(87) International publication number:
**WO 2024/175956 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Poseidon Intellectualp S.A.S.
Guayas Guayaquil (EC)**

(72) Inventor: **PEÑA ALVAREZ, Francisco Xavier
Guayaquil (EC)**

(74) Representative: **Martin Santos, Victoria Sofia
Esquivel & Martin Santos
Calle de Velázquez, 3-piso 3
28001 Madrid (ES)**

(54) **KINETIC AND POTENTIAL ENERGY OCEAN TURBINE**

(57)    The present invention comprises equipment to harness the kinetic energy of oceanic currents, seas, or river estuaries by transferring the energy of water movement to a turbine that drives an electric generator. Said equipment consists of several parts, mainly including: A) Intakes and the ejector pump with a mixing chamber, and B) Cross-flow turbine M1 (revolving door type, double blade).

**Fig. 1A**

EP 4 671 526 A1

**Description**

<u>TECHNICAL FIELD:</u>

The present invention refers to equipment or devices designed to harness the kinetic energy of ocean currents or river estuaries. The kinetic energy of water is transformed into mechanical energy, which in turn is converted into usable electrical energy. The most significant marine currents are found in oceanic movements generated by the Earth's rotation, characterized by the permanent displacement of massive water volumes along continental coasts. Their exploitation could ensure a high load factor for electrical generation. Other manifestations of marine kinetic energy are observed in tidal variations and their harnessing through damming or installations placed directly in the flow or wave motion. The present invention primarily focuses on the first scenario, which involves harnessing the kinetic energy of marine currents or the permanent flow of rivers, estuaries, or channels without necessarily relying on damming. The European Marine Energy Centre (EMEC, http://www.emec.org.uk) categorizes such devices. The field of the present invention is marine energy, oceanic energy, and Marine Hydrokinetic Energy (MHK), excluding wave energy and sea level variations due to tides (although it can be applied during specific times to enhance efficiency due to tidal variations).

<u>1. BACKGROUND OF THE INVENTION:</u>

The use of hydrokinetic energy from water dates back to Roman water wheels and references by Greek writers about Egypt and its applications. These were used to obtain energy from water for mills, transportation, and water elevation to different levels for military purposes, among others. With the advent of the industrial era, large hydraulic works on rivers began, accumulating experience in hydraulic design, construction, and hydroelectric generation. Due to environmental conflicts caused by ecosystem impacts, high initial investment costs, and the need for competitive profitability, investments have shifted toward exploring new options, focusing on the immense potential of marine currents. In response to these new challenges, several technological solutions have been proposed, such as axial flow rotor generators, vertical axis rotors (which operate with transverse current flow), and oscillating foils that alternate with the flow. Examples include systems like SeaGen, Thawt, Lanstrom, Vivace, Gesmey, etc. The development of these technologies was initially driven by the need to replace thermal generation with renewable energy in the face of global warming or geopolitical motives. The technological background for these devices includes experiences in wind energy harnessing, research on ship propellers or turbines, fluid aerodynamics knowledge, general hydraulic turbines, and hydroelectric generation expertise.

At the EMEC (European Marine Energy Centre) various equipment with different options and solutions exist, some sharing common elements with the present invention, which is why we consider it important to highlight the differences with the present invention. First, we focus on those classified as "closed Venturi type." These devices feature a funnel-shaped cover or casing that narrows, encloses, confines, and concentrates the flow. The water is directed to a turbine with a propeller slightly smaller in diameter than the tube guiding the flow. Downstream of the narrowing, the cover diameter widens slightly to improve discharge efficiency based on the Venturi effect. The list includes variations in both the geometry of the casing and the turbine itself, as well as how the kinetic energy of water is transferred to the rotor that drives the generator with different propeller types. The proposal of the present invention fundamentally differs from these devices in three ways. The first is the use of a second external Venturi that supplies a driving flow and acts as an ejector pump (whose flow is independent of the flow within the turbine connected to the generator). The flow captured by Venturi #2 provides additional energy by transforming the discharge head of the turbine into a pressure gradient with the mixing chamber, facilitating fluid movement. This difference is notable because all listed devices are limited by the Betz limit on the percentage of kinetic energy that turbines can harness from the flow acting on the rotor. Any turbine requires sufficient kinetic energy in the discharge flow to evacuate the fluid. In our case, the two Venturis work together, and the kinetic energy of the discharge water acting on the turbine is increased by the pressure differential with the mixing chamber, generated by the ejector pump with an external driving flow corresponding to Venturi #2. The energy limit for our turbine over the flow of the first Venturi is cavitation, and we can harness a significant amount of pressure energy corresponding to the depth at which the turbine is located. The energy balance for the discharge of the two flows is based on the total kinetic energy and will also adhere to the Betz limit. The difference is significant because we are discussing a substantial increase in energy and generation power of the turbine over the flow acting on the rotor and its blades due to the impulsion generated by the flow of the second Venturi. The construction costs of the ejector pump (external second Venturi) are significantly lower than manufacturing a turbine that directly captures an equivalent amount of energy from the flow through its blades. Herein lies the second difference in our proposal: we have considered that the covers or casings of the hoppers that confine the water in the intake and discharge interval, in the Venturi tubes (in their contraction and expansion intervals of the hydraulic section), are constructed using a flexible membrane. This membrane maintains its geometry by adapting to internal and external pressure variations with tensors. The third difference is the addition of a cross-flow turbine M1 (revolving door type, double blade) for electrical generation from marine hydrokinetic energy. Any of these three elements, separately or together, are not present in any of the proposals listed.

A second group of EMEC devices includes those called "horizontal axis turbines" and "vertical axis turbines." Within these two groups, there are turbine options that could be complemented with the use of an ejector pump (with a driving flow) using part of our innovation. In reality, many of these turbines could significantly improve their efficiency by complementing them with an ejector pump (external second Venturi) that allows an increase in transformed energy into hydraulic head. This condition would increase generation levels at a low cost. None of these devices incorporate the first two elements we include in our invention. Additionally, we incorporate a cross-flow turbine M1 (revolving door type, double blade) with a double vertical axis. This must operate confined by a casing, as shown in Figs. #2, 3, 4, and 5 (pages 25 and 26). Its operation is proposed to harness the kinetic energy of marine currents, and it also operates with a driving flow to increase its power (see Fig. #1-A, page 23). Moreover, it has unique characteristics not shared with any other turbine.

The cross-flow turbine M1, visible in Figs. #2, #3, #4, and #5 (pages 25 and 26), operates fully confined with a geometry constructed by joining two half-cylinders with symmetrical axes relative to their junction point at the center of the flow. The blades between rotors are separated by a distance "S" (see Fig. #5, page 26). The drawing presents a proposal with 6 blades on each rotor, oriented toward the flow concentration zone, with a discharge to an ejector pump to increase the turbine's evacuation energy (see Fig. #1-A). This submerged turbine operates using a pressure differential between the turbine discharge and the mixing chamber to evacuate the processed flow (ejector pump, Venturi #2). These elements are not present in any other turbines harnessing the kinetic energy of marine currents.

e) To emphasize the importance of the area where our equipment is located and developed, we mention the "Text approved by the European Parliament" on Wednesday, February 16, 2022, under the title "European Strategy for Offshore Renewable Energy." In its recital "R," it states: "Whereas the adoption of offshore renewable energy depends on the efforts of the public and private sectors; whereas public companies can also act alongside private companies in the offshore renewable energy sector; whereas the revision of state aid and public procurement rules should lead to greater flexibility in implementing the green transition, including offshore renewable energy projects."

## 4. DESCRIPTION OF THE INVENTION

The "Oceanic Turbine for Kinetic and Potential Energy" is the name of the invention, designating a set of elements that constitute equipment or a device to harness the kinetic energy of oceanic currents, seas, or river estuaries by transferring the energy of water movement to a turbine that drives an electric generator. The equipment consists of two main parts:A) Intakes and the ejector pump with a mixing chamber,B) Cross-flow turbine M1 (revolving door type, double blade).

### A) Intakes and Ejector Pump with Mixing Chamber

#### A.1. General Description of Intakes and Ejector Pump with Mixing Chamber:

Our invention is presented as a Venturi tube with two independent intakes: one for the processed flow and another for the driving flow of the ejector pump (see Fig. #7, page 27). In the figures, we see a loading hopper (5) named Venturi #1 and a second hopper (6-a) for the ejector pump (1) of Venturi #2. Both intake hoppers are joined in a rigid ring in a section we have called the mixing chamber (2) and share a common discharge for both flows with the geometry of a Venturi tube, which we call the discharge hopper (6-b). The first intake is called Venturi #1 for flow, and the second is Venturi #2 for head (ejector pump). These two intakes have the geometry of a Venturi tube that concentrates the kinetic energy of a larger hydraulic section by reducing the section and increasing fluid velocity. Venturi #1 (flow) has an extreme narrowing downstream and ends in a turbine (4) connected to the mixing chamber (2) via a pipe (3). The turbine discharge is driven by the transfer of kinetic energy from the water entering through Venturi #2, generating a hydraulic gradient that transforms into head. In the "mixing chamber," the flows from the loading hoppers corresponding to Venturi #1 and #2 merge.

The concept of The present invention is to take advantage of the relatively stable water velocities of oceanic currents (kinetic energy) and the ability to capture this energy at significant depths (potential energy). Our invention introduces the idea of using a second Venturi #2 with a mixing chamber at a lower pressure than that at the turbine discharge, creating a hydraulic gradient between the turbine and the mixing chamber to move the fluid. The total harnessable energy from the two flows is restricted by the Betz limit, but with the ejector pump, it is possible to transfer part of Venturi #2's energy to the turbine in Venturi #1, using this increased energy to drive the turbine. By generating lower pressure in the mixing chamber, a significant percentage of the existing potential energy can be harnessed due to the depth at which the turbine is located. The condition is that the flow entering Venturi #2 must be much greater than the processed flow, allowing a significant increase in usable power in the turbine via a hydraulic gradient to the mixing chamber.

The pressure in the mixing chamber is designed with Venturi #2, allowing us to utilize most of the pressure head generated by the depth at which the turbine of Venturi #1 is located. Through the ejector pump (Venturi #2), a hydraulic gradient is created that moves the discharge flow of the turbine. When a turbine operates solely with kinetic energy transferred directly to its rotors, it is limited by the amount of energy the water needs to maintain movement at its discharge (Betz coefficient limit). Furthermore, the amount of energy depends on the diameter or hydraulic section captured by its blades. With the ejector pump, we solve this issue because we can significantly increase the power generated through the pressure gradient at the discharge, ensuring the fluid has the energy to reach the mixing chamber with the entirety of the processed flow. Additionally, the second Venturi, with a much larger flow, can complete the discharge to the ocean of the total flow from both Venturis. To prevent cavitation, we maintain positive pressure above the water vapor pressure in the mixing chamber. Our limit for increasing this head through the ejector pump is atmospheric pressure plus the hydraulic pressure head of the depth at which the turbine is located, minus losses. This gives us control over cavitation risks if our velocity increases are within the available Net Positive Suction Head (NPSH).

Our equipment, by incorporating a second flow from the ejector pump, adds kinetic energy to the turbine, transformed into head. The ejector pump provides an additional pressure head level at very low construction costs, as it is made of a flexible membrane (the second element of The present invention). The advantage of this innovation in harnessing the kinetic energy of marine currents lies in how this energy is transferred to the turbine rotor. In the case of propeller rotors, large blades and a very robust turbine are needed to transfer the kinetic energy of water directly to a mechanical shaft. In contrast, with the ejector pump, kinetic energy is transformed into pressure energy, and through a pressure gradient, it is harnessed in the turbine with smallerdiameter propellers.

*A.2. Flexible Membranes Forming the Venturi Tube Hoppers:*

In our invention, the intake and discharge hoppers of the Venturi tubes are flexible membranes that adjust their geometry to variations in internal and external pressure. They can be manufactured with an impermeable fishing net held by tensors connected to stationary points (such as the ocean floor and simultaneously to floating buoys with the same anchoring or fixation condition, page 27). The hoppers made of flexible membranes, in the case of Venturi #2 (ejector pump), are adjusted between the rigid ring of the mixing chamber and the ends of the tensors anchored to the ocean floor or a buoy. For Venturi #1, we have a flange at the end of the pipe (3), and the other end of the membrane is similarly tensioned against fixed supports serving as anchors. By fixing the ends of the tensors, the entire kinetic energy of the marine current can be utilized, and the geometry of the membrane adjusts to variations in internal and external pressures.

If we consider a fluid in motion within a Venturi-type tube, we observe that at the intake, the hydraulic section decreases, increasing fluid velocity with a decrease in internal pressure. At the discharge, the hydraulic section increases, reducing velocity and increasing pressure. If internal pressure drops in the intake hopper of our invention with a very flexible tube, it collapses due to the external pressure that remains constant. If it were rigid, it would deform and be subjected to compressive stress due to the pressure difference. In our invention, we propose a tube made of a flexible membrane with collapse restrictions via tie rods. In this case, the pressure difference is transferred to the tensors as tensile stress, resisted similarly to the cover of a circus tent. At the discharge hopper, the internal pressure is reversed, rising from a minimum until equaling internal and external pressure at the far end, a situation we can also support with tensors.

*A.3. An Analogy to Explain the Importance of This Innovation Based on Hydroelectric Plant Construction Experience: (See Fig. #1-B, page 23.)*

In the design of a hydroelectric plant, we use the term head height Ho (defined as the elevation difference between the turbine axis and the water surface level in the loading tank). In our case, let's call $D_5(V^3)/(2g)$ the variation of kinetic energy in the loading hopper of Venturi #1. Now, imagine our turbine submerged at a depth of $Z_1$ meters, and suppose we remove almost all the water at the discharge while maintaining a value Hd at the turbine discharge (corresponding to a pressure head that protects against cavitation and subsequent losses after the turbine to prevent fluid stoppage).

We would have a usable head height

$$Ho = Z_1 - Hd + D_5(V^2)/(2g)$$

Our Ho value gives us a usable head height to generate mechanical energy transformable into electricity. Considering $SDh_1$ as the head losses at the intake of hopper (5) and "He" as the effective head height, we get

$$He = Ho - SDh_1$$

(this would be the head height we can harness in the turbine).

This is the importance of the ejector pump: it generates a pressure differential at the turbine discharge, allowing the potential energy to be harnessed based on the depth at which the turbine is located.

At the turbine discharge, we have a pressure head Hd(8), which is a function of:

$$Hd = P_c/(r\,g) + SDh_2 + (Z2-Z1) + D_3V^2/(2g) + A$$

- $P_c/(r\,g)$: Pressure head in the mixing chamber.
- $SDh_2$: Head loss due to energy losses between the turbine discharge and the mixing chamber.
- $Z2 - Z_1$: Elevation difference between the mixing chamber and the turbine discharge.
- $D3V4/(2g)$: Variation of kinetic energy in the pipe between the turbine and the mixing chamber.
- A: Variables and head height parameters that protect against cavitation in the turbine and transform kinetic energy into potential energy (providing safety factors).

A.4. Some Elements for Equipment Design: Our equipment, composed of two intake hoppers with their respective independent flows, depends on the relationship between the processed flow and the ejector pump flow (driving flow) for its design. Using fundamental hydraulic equations in mathematical or physical scale models, we can determine the operational losses of the equipment and obtain the pressure head that can be transferred for a given processed flow and its corresponding equipment. To implement a project, we must know the depth and velocity conditions of marine currents, define a flow and head height that match the demand, and select a location. With a defined power and processed flow, a geometry and materials with their corresponding roughness are determined, and losses at the intake hopper and discharge to the mixing chamber are experimentally established using scale models. A pressure differential between the turbine and the mixing chamber is adjusted. With this data, we can design the ejector pump, its hydraulic sections, flow, and geometry. Considering the magnitude of flows in marine currents and the depths at which these devices could be installed, their potential is enormous.

We define the power load ratio as: Rp

$$Rp = \text{ejector pump flow} / \text{processed flow.}$$

An important variable to define is the relationship between the hydraulic section Ac of the mixing chamber ring with its corresponding pressure and the hydraulic section At of the turbine discharge pipe. With the Ac/At ratio, we can adjust the pressure differential between the turbine discharge and the mixing chamber's operating pressure.

Through mathematical analysis, we can define the Rp values and adjust to parameters with high efficiency, ensuring turbine power without cavitation.

For the design of flexible membranes, internal and external pressure differences for various possible load states are considered. The magnitude of actions on the membrane and its stresses are determined. Variations in internal and external pressures can be obtained from fundamental hydraulic equations and interaction with marine currents, adhering to aerodynamic principles for different boundary conditions.

*A.6. Variants of the Basic Design:*

The present invention, in its first part, "Intakes and Ejector Pump with Mixing Chamber," has been presented in an arrangement corresponding to Fig. #1-A. However, the elements of our intakes and ejector pump with mixing chamber can be presented in different arrangements. A second presentation places the flow Venturi inside the ejector pump, as shown in Fig. #1-C. As a third option, we have presented the possibility of developing multiple intake hoppers with a large central Venturi (see Fig. #1-D, page 24).

*B. Cross-Flow Turbine M1 (Revolving Door Type, Double Blade)*

*B.1. General Description of the Turbine:*

The intakes and ejector pump with mixing chamber of our invention can operate independently or be added to many existing commercial or experimental turbines, significantly improving their efficiency. The cross-flow turbine M1 (revolving door type, double blade) is designed to operate solely by harnessing the kinetic energy of marine currents, although it has many other possibilities. It is a cross-flow turbine with a horizontal or vertical axis that can operate with large flows, is easy to manufacture, and can be adjusted for small to medium head heights. The M1 turbine is loaded via a Venturi #1 tube, and we consider that this turbine operates only fully confined. The geometry of its casing is constructed by joining two half-cylinders with symmetrical axes relative to their junction point at the center of the flow. It has rotors with blades (six to eight vanes) oriented toward the flow concentration zone and a discharge to an ejector pump to increase the turbine's evacuation energy. This submerged turbine is connected to an ejector pump, which generates a pressure differential between the turbine discharge and the mixing chamber to evacuate the processed flow. The ejector pump uses the kinetic energy of marine currents, estuaries, or channels for its operation. It includes geometric details and parts indicated in Figs. #2, 3, 4, and 5 (pages 25 and 26). We can see a plan view in Fig. #5 with our cross-flow turbine (with two vertical or horizontal axes), a frontal view section in Fig. #3, and a longitudinal view section in Fig. #4. In Fig. #5, some of its most important geometric characteristics are defined (radius, blade size and break angle, flow concentration wedge, and distance "S" between blades of the two rotor axes). For its design, a demand is defined, and its parameters are adjusted based on those obtained for "S," which is experimentally adjusted with a scale prototype. The rotor blade radius is assumed based on the manufacturer's equipment capabilities. Once its value is adjusted, the dimensions and characteristics of the turbine are defined.

## 5. DESCRIPTION OF THE DRAWINGS:

In Fig. #1-A, we can see a basic schematic of our invention composed of 2 Venturi tubes. Venturi #1 for flow with its intake hopper captures the processed flow. Venturi #2 is an ejector pump that generates a lower pressure in the mixing chamber than that at the turbine discharge. The turbine and mixing chamber are connected via a pipe. The pressure in the mixing chamber must be positive and above the water vapor pressure with a safety margin, considering all real flow scenarios.

In Fig. #1-B, at the end of the description, we see a schematic of an analogy that occurs with our invention, generating a usable head height for the turbine with value $Ho = Z_1 - Hd + D_5 V^2/2g$, where:

- $Z_1$ corresponds to the depth of the turbine.
- $D_5 V^2/2g$: Variation of kinetic energy at the intake.
- Hd: Head height at the turbine discharge in the pipe.
- Effective head height: He

where

-

$$He = Ho - SDh_1.$$

- $SDh_1$: Head losses at the intake of hopper (5).

In Fig. #1-C, at the end of the description, we can see the "Oceanic Turbine for Kinetic and Potential Energy" in a different arrangement from Fig. #1-A. In this case, Venturi #1 is inside Venturi #2, and the rigid ring houses the turbine discharge; the two flows merge in the mixing chamber. This arrangement is more compact than the previous one.

In Fig. #1-D, we have a third presentation of the invention with two turbines and a central ejector pump generating the mixing chamber for both turbines. This presentation demonstrates the flexibility of arrangements or solutions for this device. **In** reality, many operational solutions exist based on the core idea.

In Fig. #6, page 27, we can see the intake hoppers of Venturi #1 and #2 in a frontal view, constructed with flexible membranes held by tensors, resembling an impermeable fishing net. The tensors capture and support the stresses, maintaining the geometry to prevent collapse due to internal and external pressure differences. For this, the inner end is attached to a central rigid ring, and externally, the tensors are secured with anchors to the ocean floor or to buoys that are also anchored. In this case, the mixing chamber is located inside a rigid ring in Venturi #2, and the same situation applies to Venturi #1, which ends in a rigid ring housing the turbine.

In Fig. #2, page 25, we have a basic presentation of the M1 turbine (revolving door type, double blade, with two vertical axes) in a plan view. In Fig. #3, we have a section A-A', a frontal view of the turbine, showing spacing Y1 corresponding to the placement of diaphragms to stabilize the turbine axis when it is of a certain length. The blades have a stiffening rib at the perimeter edges, where the opening for the turbine axis stabilization diaphragm is located.

Fig. #4, at the end of the description, corresponds to a longitudinal section B-B' of the turbine. We can see its discharge, and in Fig. #5, some of its most important geometric characteristics are defined (radius, blade size and break angle, flow concentration wedge, and distance "S" between blades of the two rotor axes). The "S" values defined for the turbine are experimentally adjusted with a scale prototype. The rotor blade radius is assumed based on the manufacturer's equipment capabilities. Once its value is adjusted, the dimensions and characteristics of the turbine are defined.

Two versions of the M1 turbine are presented: one with six vanes and another with eight vanes. We have prepared Fig. #8 with "Details of the rotor blades."

Fig. #6, at the end of the description, presents a frontal view of the equipment with Venturi #1 and #2, with their tensors to tension the membranes and the central location of the turbine and mixing chamber.

Fig. #7, at the end of the description, shows a longitudinal section with the presentation of the flexible membranes, both for the intake and discharge hoppers.

## Claims

1. A product consisting of equipment to harness the kinetic energy of oceanic currents, transforming it into mechanical energy, which COMPRISES: an external ejector pump (1) with a flow independent of the processed flow, constituted by a Venturi #2 tube, with a loading hopper for the driving flow (6-a), a central rigid ring containing the mixing chamber (2), a discharge hopper (6-b), and a cross-flow turbine.

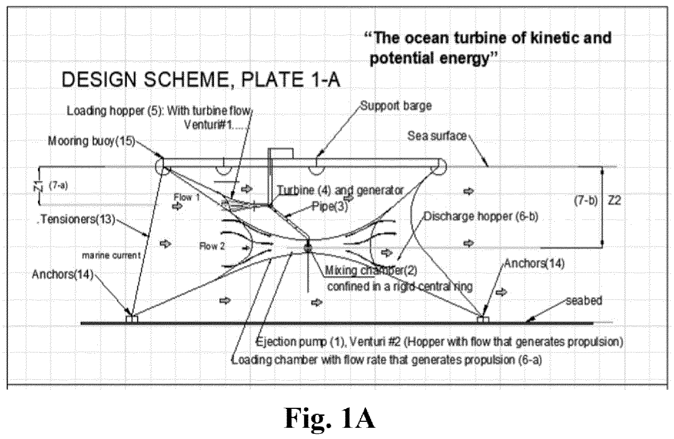

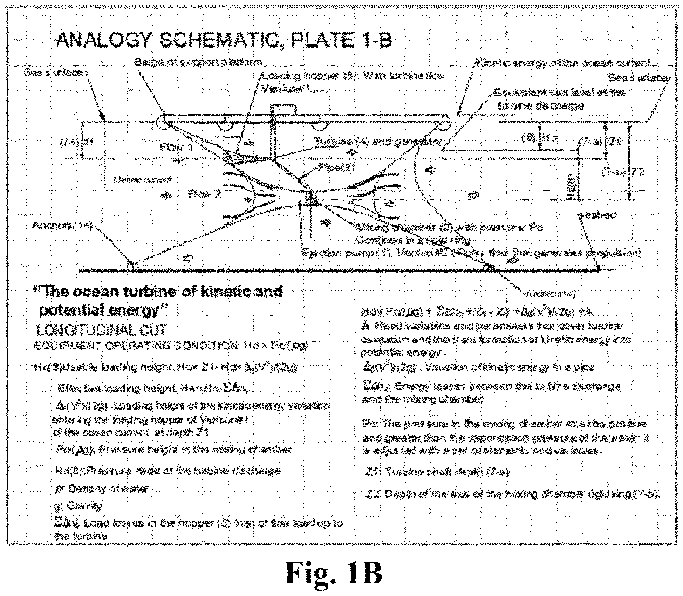

2. A product according to claim 1, **characterized in that** the central rigid ring containing the mixing chamber (2) is connected via a pipe (3) to the discharge of a turbine (4). The turbine is driven by the flow entering another loading hopper (5) of Venturi #1 (see Fig. 1-A).

3. A product according to claim 2, **characterized in that** the mixing chamber (2), where the two loading hoppers of Venturi #1 (5) and Venturi #2 (6-a) discharge, has a common evacuation hopper, which is the discharge hopper (6-b) (see Fig. 1-A).

4. A product according to claim 3, **characterized in that** the ejector pump (1), in its central zone of the mixing chamber (2), has a pressure Pc lower than that existing at the turbine discharge (4), with a head height at the turbine discharge of Hd (8).

5. A product according to claim 4, **characterized in that** the rigid ring of the mixing chamber is located at a depth Z2 (7-B), and the pressure in the mixing chamber Pc is obtained by the variation of pressure in the loading hopper of the ejector pump through the reduction of the hydraulic section in the same, with an increase in velocity due to the Venturi effect of the ejector pump.

6. A product according to claim 5, **characterized in that** the value of Hd (8) must be positive and greater than the head height corresponding to the pressure Pc in the mixing chamber, and must also comply with cavitation control parameters, such that velocity increases are within the available Net Positive Suction Head (NPSHd).

7. A product according to claim 6, **characterized by** the use of an impermeable flexible membrane (10), (11), (12) (see Fig. #7), held and tensioned with tensors to form the intake (6-a), (5) and discharge (6-b) hoppers of the Venturis.

8. A product according to claim 7, **characterized in that** the flexible membrane adapts its geometry to the internal and external pressure difference of the extreme hoppers of the Venturi tubes. The membrane tensioners limit its deformation and transfer stresses to buoys (15) or fixed points or anchors (14) on the ocean floor.

9. A product according to claim 8, **characterized by** a cross-flow turbine M1 (15) (revolving door type, double blade) (see Figs. #2, #3, #4, and #5) for electrical generation from marine hydrokinetic energy (MHK) with a horizontal or vertical axis (16).

10. A product according to claim 9, **characterized in that** the elements of the cross-flow turbine M1 (15) are two rotors (16) with six or eight blades (17). At the turbine intake, there is a contraction of the hydraulic section to concentrate the flow, constituted by a flow concentration wedge (18) with a geometry indicated in Fig. #5, with a 15° deviation to each side of the flow. A casing with aerodynamic geometry (19) confines and redirects the flow, with a curvature starting and ending tangent to the discharge pipe and the turbine casing. Details of the rotor blades (20) with six and eight blades (see Fig. #8).

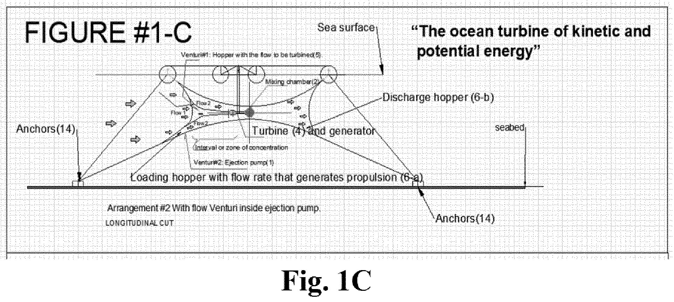

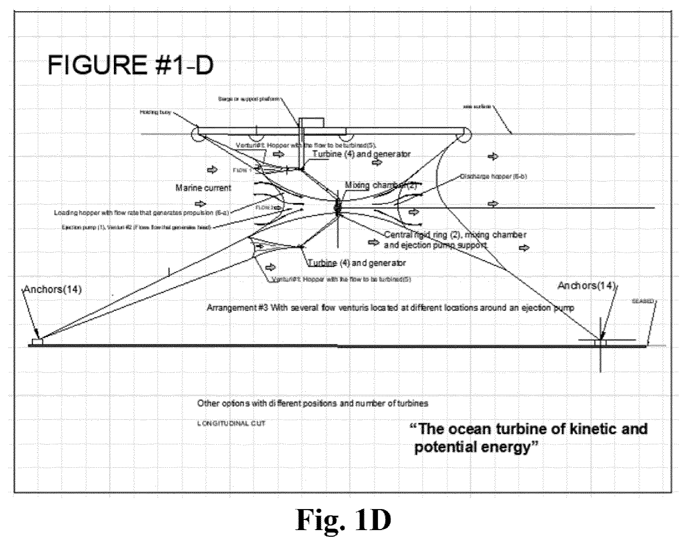

11. A product according to claim 10, **characterized by** the possibility of operating the elements constituting the turbine together or independently, with the ejector pump (1) and any turbine, without using the cross-flow turbine M1 (15) (revolving door type, double blade), flexible membranes or rigid hopper options, with anchoring tensors to fix the movement of the Venturi loading and discharge hoppers or options to maintain the extreme points of the hoppers stationary using relatively moving equipment, and the different arrangements that can be made (see Fig. 1-C and Fig. 1-D).

**"The ocean turbine of kinetic and potential energy"**

DESIGN SCHEME, PLATE 1-A

Loading hopper (5): With turbine flow,
Venturi#1

Support barge

Mooring buoy(15)

Sea surface

(7-a)

Flow 1

Turbine (4) and generator

Pipe(3)

(7-b) Z2

Discharge hopper (6-b)

Tensioners(13)

marine current

Flow 2

Anchors(14)

Anchors(14)

Mixing chamber(2)
confined in a rigid central ring

seabed

Ejection pump (1), Venturi #2 (Hopper with flow that generates propulsion)
Loading chamber with flow rate that generates propulsion (6-a)

**Fig. 1A**

Fig. 1B

Fig. 1C

FIGURE #1-D

Fig. 1D

**FIGURE #2**

"The ocean turbine of kinetic and potential energy"

M1(15) CROSS FLOW TURBINE (Double-leaf revolving door type)

Rotor #2 with six blades on each axis
With horizontal or vertical axis (16)

Flow concentration wedge(18)

Discharge to the Mixing Chamber

Flow 1

Pipe(3)

Wedge length = 1.5R

Blades (17)

Rotor #1 with six blades on each axis (16)
Rotor blade radius: R

Housing with aerodynamic geometry(19)

Plan view of a cross-flow turbine with two numbered shafts (16) on both shafts, this layout with six blades per shaft

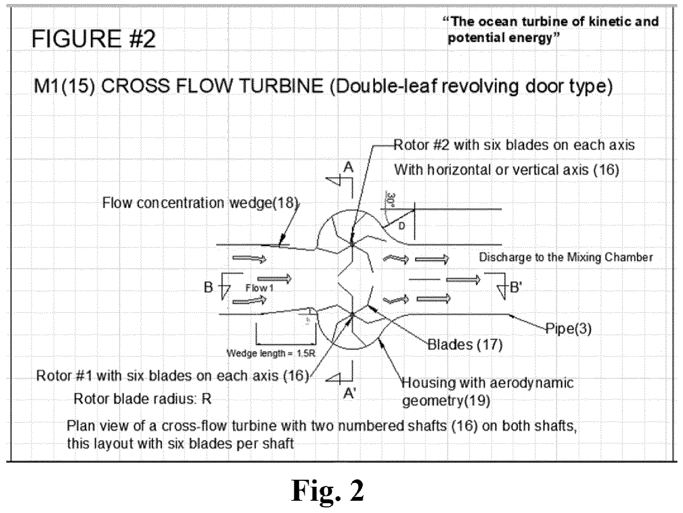

## Fig. 2

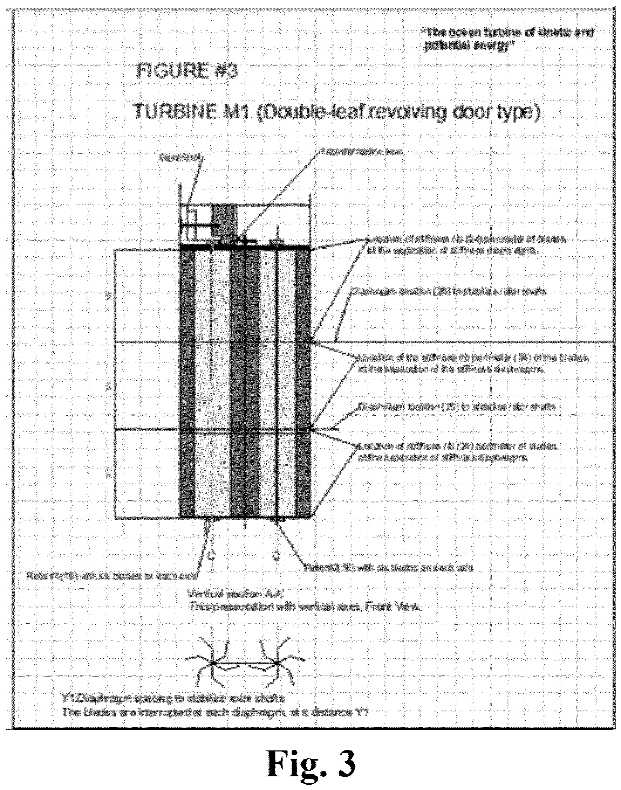

Fig. 3

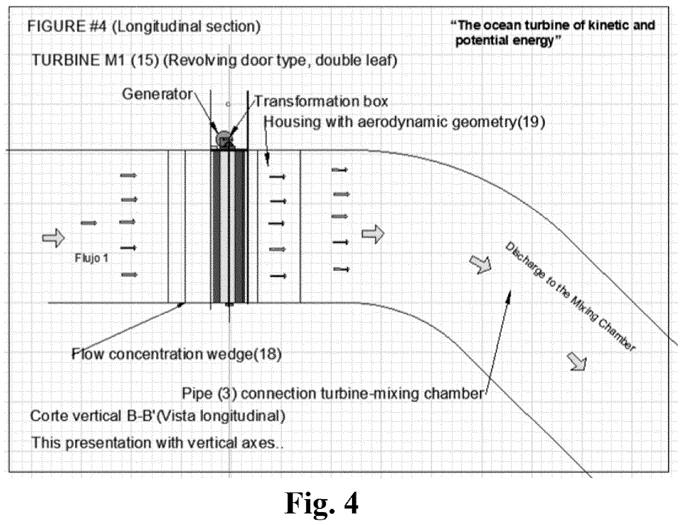

Fig. 4

EP 4 671 526 A1

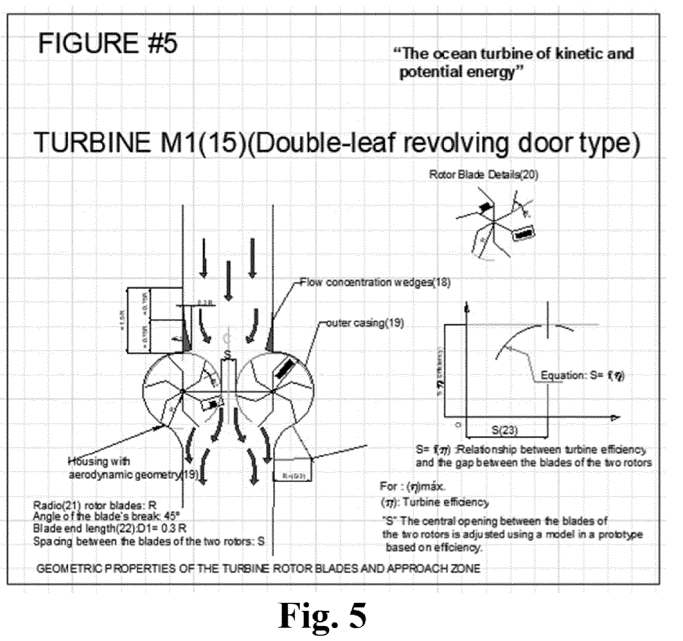

Fig. 5

16

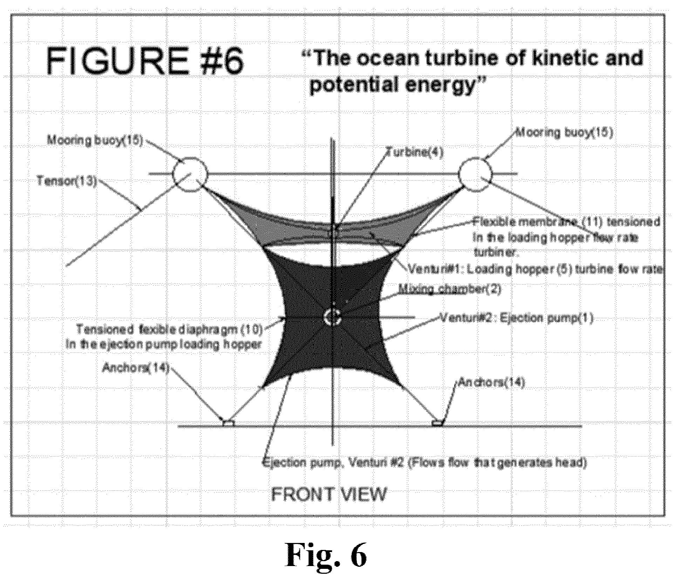

Fig. 6

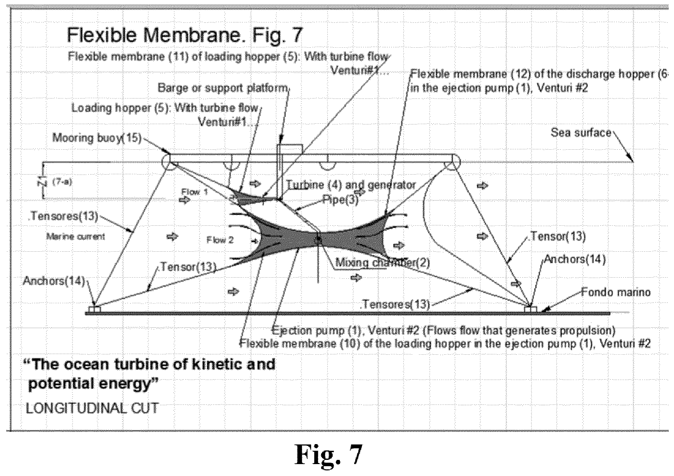

Fig. 7

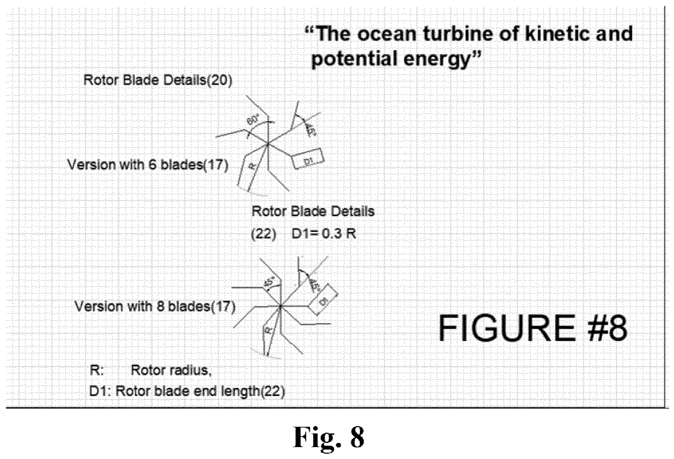

Fig. 8

## INTERNATIONAL SEARCH REPORT

| International application No. |
| --- |
| PCT/IB2023/051647 |

### A. CLASSIFICATION OF SUBJECT MATTER

(CIP) F03B13/00, 13/12, 13/26 (2023.01)

According to International Patent Classification (IPC) or to both national classification and IPC

### B. FIELDS SEARCHED

Minimum documentation searched (classification system followed by classification symbols)

(CIP) F03B13/00, 13/12, 13/26 (CPC) F03B13/264, Y02E10/30

Documentation searched other than minimum documentation to the extent that such documents are included in the fields searched

Electronic data base consulted during the international search (name of data base and, where practicable, search terms used)

Esp@cenet, Derwent Innovations, Google, INAPI Chile

### C. DOCUMENTS CONSIDERED TO BE RELEVANT

| Category* | Citation of document, with indication, where appropriate, of the relevant passages | Relevant to claim No. |
| --- | --- | --- |
| A | WO2010086474A1 (ALANDETE, L) 08-05-2010, Abstract, page 7, figure 1 | |
| A | US9127639B2 (CHO, J.) 09-08-2015, the whole document | |
| A | US4960363A (BERGSTEIN, F.) 02-10-1990, the whole document | |
| A | US10876513B2 (VERDERG LTD.) 12-29-2020, the whole document | |
| A | ES2524011 B1 (ALANDETE, L.) 07-15-2015, the whole document | |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09/08/2023   09 August 2023 | 21/08/2023   21 August 2023 |

| Name and mailing address of the ISA/ INAPI, Av. Libertador Bernardo O'Higgins 194, Piso 17 Santiago, Chile | Authorized officer |
| --- | --- |
| Facsimile No. | Telephone No. |

Form PCT/ISA/210 (second sheet) (January 2015)

## INTERNATIONAL SEARCH REPORT

International application No.

PCT/IB2023/051647

C (Continuation). DOCUMENTS CONSIDERED TO BE RELEVANT

| Category* | Citation of document, with indication, where appropriate, of the relevant passages | Relevant to claim No. |
|---|---|---|
| A | US2005099012A1 (WILLIAM, R.) 05-12-2005, the whole document | |
| A | GB2443195A 04-30-2008 (VERDERG CONNECTORS LTD.), the whole document | |

Form PCT/ISA/210 (continuation of second sheet) (January 2015)

INTERNATIONAL SEARCH REPORT
Information on patent family members

International application No.

PCT/IB2023/051647

| Patent document cited in the search report | Publication Date | Patent family Member(s) | Publication Date |
|---|---|---|---|
| WO2010086474A1 | 05-08-2010 | EP2392817 (A1) | 07-12-2011 |
| | | ES2373892 (A1) | 10-02-2012 |
| | | ES2373892 (B1) | 19-11-2012 |
| | | ES2379258 (A1) | 24-04-2012 |
| | | ES2379258 (B1) | 05-11-2012 |
| | | MA32960 (B1) | 02-01-2012 |
| US9127639B2 | 08-09-2015 | US2011110797 (A1) | 12-05-2011 |
| | | WO2011053978 (A2) | 05-05-2011 |
| | | WO2011053978 (A3) | 28-07-2011 |
| US4960363A | 02-10-1990 | CA2052001 (A1) | 25-03-1992 |
| | | CA2052001 (C) | 01-11-1994 |
| | | US5088884 (A) | 18-02-1992 |
| US10876513B2 | 29-12-2020 | US2017184069 (A1) | 29-06-2017 |
| | | AU2015242400 (A1) | 22-09-2016 |
| | | AU2015242400 (B2) | 08-11-2018 |
| | | BR112016022914(A2) | 15-08-2017 |
| | | BR112016022914(B1) | 27-09-2022 |
| | | CA2943700 (A1) | 08-10-2015 |
| | | CA2943700 (C) | 19-07-2022 |
| | | CN106164471 (A) | 23-11-2016 |
| | | CN106164471 (B) | 28-04-2020 |
| | | EP3126665 (A1) | 08-02-2017 |
| | | EP3126665 (B1) | 12-06-2019 |
| | | ES2743698 (T3) | 20-02-2020 |
| | | GB2524782 (A) | 07-10-2015 |
| | | GB2524782 (B) | 20-04-2016 |
| | | HK1209168 (A1) | 24-03-2016 |
| | | JP2017519139 (A) | 13-07-2017 |
| | | JP6604964 (B2) | 13-11-2019 |
| | | KR20160140860 (A) | 07-12-2016 |
| | | KR102230415 (B1) | 19-03-2021 |
| | | PL3126665 (T3) | 29-11-2019 |
| | | RU2016135698 (A) | 04-05-2018 |
| | | RU2016135698 (A3) | 03-10-2018 |
| | | RU2684855 (C2) | 15-04-2019 |
| | | SI3126665 (T1) | 30-10-2019 |
| | | WO2015150819 (A1) | 08-10-2015 |
| ES2524011B1 | 15-07-2015 | ES2524011 (A2) | 03-12-2014 |
| | | ES2524011 (R1) | 23-12-2014 |
| US2005099012A1 | 12-05-2005 | US6954006 (B2) | 11-10-2005 |

Form PCT/ISA/210 (patent family annex) (January 2015)

INTERNATIONAL SEARCH REPORT
Information on patent family members

International application No.

PCT/IB2023/051647

| Patent document cited in the search report | Publication Date | Patent family Member(s) | Publication Date |
|---|---|---|---|
| GB2443195A | 30-04-2008 | GB2443195 (B) | 26-08-2009 |
| | | GB2443195 (B8) | 05-05-2010 |
| | | AU2007280570 (A1) | 07-02-2008 |
| | | AU2007280570 (B2) | 06-09-2012 |
| | | CA2659578 (A1) | 07-02-2008 |
| | | CA2659578 (C) | 05-05-2015 |
| | | EP2064441 (A1) | 03-06-2009 |
| | | EP2064441 (B1) | 23-09-2015 |
| | | ES2557297 (T3) | 25-01-2016 |
| | | JP2009545692 (A) | 24-12-2009 |
| | | JP5118138 (B2) | 16-01-2013 |
| | | KR20090038923 (A) | 21-04-2009 |
| | | KR101354182 (B1) | 22-01-2014 |
| | | PT2064441 (E) | 26-01-2016 |
| | | US2010207393 (A1) | 19-08-2010 |
| | | US8446031 (B2) | 21-05-2013 |
| | | WO2008015047 (A1) | 07-02-2008 |

Form PCT/ISA/210 (patent family annex) (January 2015)

23

**REFERENCES CITED IN THE DESCRIPTION**

**Non-patent literature cited in the description**

- *Text approved by the European Parliament*, 16 February 2022